# EUROPÄISCHE PATENTANMELDUNG

(11) **EP 1 577 272 A2**
(43) Veröffentlichungstag der Anmeldung: **21.09.2005**
(21) Anmeldenummer: 05000217.9
(22) Anmeldetag: 07.01.2005
(51) Int. Cl.: C03B 9/453

(54) **Schubvorrichtung zur Überführung von Glasartikeln von einer Station einer IS-Glasmaschine auf ein Fördermittel**

(30) Priorität: 19.03.2004 DE 102004013519
(71) Anmelder: GPS GLASPRODUKTIONS-SERVICE GMBH, 45329 Essen (DE)
(72) Erfinder: Emrath, Norbert, D-45721 Haltern (DE); Diekämper, Lars, D-45721 Haltern (DE)
(74) Vertreter: Lelgemann, Karl-Heinz

(57) **Zusammenfassung**

Eine Schubvorrichtung (1) zur Überführung von Glasartikeln von einer Station einer IS-Glasmaschine auf ein Fördermittel hat ein Verschiebeglied (2), das in Anlage an die zu überführenden Glasartikel bringbar und mittels dem die Glasartikel von der Station auf das Fördermittel stellbar sind, Stellteile (17 bis 23), die unmittelbar mit dem Verschiebeglied (2) verbunden sind, und eine Antriebsvorrichtung (5, 6), mittels der das Verschiebeglied (2) über die Stellteile (17 bis 23) antreibbar ist.

Um einen synchronen Lauf der Schubvorrichtung (1) mit dem Fördermittel und einen sicheren Transport der Glasartikel von der Station der IS-Glasmaschine auf das Fördermittel zu gewährleisten, ohne die Glasartikel zu beschädigen, wird vorgeschlagen, dass die Antriebsvorrichtung (5, 6) eine erste Antriebsstufe (5), mittels der die unmittelbar mit dem Verschiebeglied (2) verbundenen Stellteile (17 bis 23) antreibbar sind, und eine zweite Antriebsstufe (6) aufweist, die unter der ersten Antriebstufe (5) angeordnet ist und mittels der ein die unmittelbar mit dem Verschiebeglied (2) verbundenen Stellteile (17 bis 23) halternder Träger (16) antreibbar ist.

## Beschreibung

Die Erfindung bezieht sich auf eine Schubvorrichtung zur Überführung von Glasartikeln von einer Station einer IS-Glasmaschine auf ein Fördermittel, mit einem Verschiebeglied, das in Anlage an die zu überführenden Glasartikel bringbar und mittels dem die Glasartikel von der Station auf das Fördermittel stellbar sind, Stellteilen, die unmittelbar mit dem Verschiebeglied verbunden sind, und einer Antriebsvorrichtung, mittels der das Verschiebeglied über die Stellteile antreibbar ist.

Ausgehend von dem vorstehend geschilderten Stand der Technik liegt der Erfindung die Aufgabe zugrunde, eine Schubvorrichtung der vorstehend geschilderten Art zu schaffen, die über einen synchronen Lauf mit dem Fördermittel verfügt und dadurch einen sicheren Transport der Glasartikel von der Station der IS-Glasmaschine auf das Fördermittel gewährleistet, ohne dass die Gefahr besteht, dass die Glasartikel beschädigt werden. Darüber hinaus soll die Antriebseinrichtung der Schubvorrichtung in einfacher Weise wartbar sein, wobei defekte Teile mit einem möglichst geringen Aufwand austauschbar sein sollen.

Diese Aufgabe wird erfindungsgemäß dadurch gelöst, dass die Antriebsvorrichtung eine erste Antriebsstufe, mittels der die unmittelbar mit dem Verschiebeglied verbundenen Stellteile antreibbar sind, und eine zweite Antriebsstufe aufweist, die unter der ersten Antriebsstufe angeordnet ist und mittels der ein die unmittelbar mit dem Verschiebeglied verbundenen Stellteile halternder Träger antreibbar ist. Durch das Zusammenwirken der ersten Antriebsstufe und der zweiten Antriebsstufe der Antriebsvorrichtung kann der Bewegungsablauf der Schubvorrichtung so realisiert werden, dass die Glasartikel in derjenigen Phase, in der sie auf das Fördermittel geraten, praktisch mit der Geschwindigkeit bewegt werden, die auch das Fördermittel aufweist. Hierdurch kann ein extrem sicherer Übergang der Glasartikel von der Station der IS-Glasmaschine auf das Fördermittel gesichert werden, wobei darüber hinaus nicht die Gefahr besteht, dass es zu Beschädigungen der Glasartikel und - daraus resultierend - ggf. zu Störungen des Betriebsablaufs der IS-Glasmaschine bzw. des Fördermittels kommt. Darüber hinaus können die beiden Antriebsstufen in einfacher Weise ausgetauscht werden, da sie für entsprechende Montagevorgänge etc. gut zugänglich sind. Aufgrund der Untereinanderanordnung der beiden Antriebsstufen der Antriebsvorrichtung ist gewährleistet, dass ausreichend Raum für andere Teile der entsprechenden Station der IS-Glasmaschine zur Verfügung steht, und zwar in einem hierfür besonders kritischen vertikalen Bereich.

Vorteilhaft ist die erste Antriebsstufe mit einem Elektromotor ausgerüstet, der mit einem Antriebsglied der unmittelbar mit dem Verschiebeglied verbundenen Stellteile in Antriebsverbindung steht.

Entsprechend verfügt die zweite Antriebsstufe über einen Elektromotor, der beispielsweise über ein Kupplungsdistanzstück in Antriebsverbindung mit dem Träger ist.

Die beiden Elektromotoren der Antriebseinrichtung sind vorteilhaft als Servomotoren ausgebildet.

Eine exakte Synchronisierung zwischen der Schubvorrichtung, mittels der die Glasartikel auf das Fördermittel verbracht werden, und dem Förderband lässt sich erreichen, wenn die am Träger gehalterten Stellteile des Verschiebeglieds mittels der ersten Antriebsstufe während der Überführung eines Glasartikels von der Station zum Fördermittel kontinuierlich in eine Richtung drehbar sind und der Träger mittels der zweiten Antriebsstufe während der Überführung eines Glasartikels von der Station zum Fördermittel in einer ersten Bewegungsphase in die eine Richtung und in einer zweiten Bewegungsphase in die andere, entgegengesetzte Richtung dreh- bzw. schwenkbar ist, wobei die Drehung der Stellteile und die Drehung bzw. Schwenkung des Trägers während der beiden Bewegungsphasen desselben einander überlagern.

Vorteilhaft ist die erste Antriebsstufe, mittels der die unmittelbar mit dem Verschiebeglied zusammenwirkenden Stellteile in Antriebsverbindung stehen, unter der zweiten Antriebsstufe, die den Träger bewegt, bzw. an der dem Verschiebeglied abgewandten Stirnseite der zweiten Antriebsstufe angeordnet.

Eine derartige Anordnung kann in konstruktiv-technisch eleganter Weise dadurch erzielt werden, dass eine Abgangswelle der ersten Antriebsstufe koaxial die zweite Antriebsstufe und eine von dieser angetriebene Hohlwelle durchragt, in Bezug auf die zweite Antriebsstufe und die Hohlwelle rotierbar ist, an der distalen Stirnseite der Hohlwelle durch diese vorsteht und drehfest mit einem das Antriebsglied der unmittelbar mit dem Verschiebeglied verbundenen Stellteile bildenden Antriebszahnrad verbunden ist.

Eine gleichmäßige Übertragung der Rotationsbewegung der Abgangswelle der ersten Antriebsstufe in die Schubbewegung des Verschiebeglieds kann erzielt werden, wenn das drehfest mit der Abgangswelle der ersten Antriebsstufe verbundene Antriebszahnrad mittels eines Zahnriemens zumindest zwei Abtriebszahnräder antreibt, von denen jedes drehfest mit einem mittels eines Kurbelarms mit dem Verschiebeglied verbundenen Wellenzapfen verbunden ist.

Der Träger bildet gemäß einer vorteilhaften Weiterbildung der erfindungsgemäßen Schubvorrichtung ein Gehäuse für das Antriebszahnrad der ersten Antriebsstufe, den Zahnriemen und die zumindest zwei Abtriebszahnräder.

Die für die Realisierung des gewünschten Bewegungsablaufs der Schubvorrichtung erforderliche Bewegung des Trägers lässt sich bewerkstelligen, indem die Abgangs- bzw. Hohlwelle der zweiten Antriebsstufe drehfest mit dem Träger verbunden und dieser mittels der Abgangs- bzw. Hohlwelle entsprechend der Drehrichtung in die eine bzw. die andere Richtung dreh- bzw. schwenkbar ist.

Vorteilhaft sind die beiden Antriebsstufen der Antriebseinrichtung der erfindungsgemäßen Schubvorrichtung in einem ihnen gemeinsamen Gehäuse angeordnet, wobei sie innerhalb dieses Gehäuses aneinander angeflanscht sind.

Die vorstehend geschilderte Schubvorrichtung ist zweckmäßigerweise an vorhandene IS-Glasmaschinen universell montierbar, wobei sie sowohl als linke als auch als rechte Ausführungsform gestaltbar sein kann.

Eine Steuereinheit der Schubvorrichtung ist direkt in eine Steuerungsvorrichtung der IS-Glasmaschine integrierbar, derart, dass Geschwindigkeits- bzw. Taktänderungen der IS-Glasmaschine unmittelbar und automatisch in dementsprechende Anpassungen und Änderungen des Bewegungsablaufs der Schubvorrichtung resultieren, wobei dies durch Eingriffe in den Betrieb der beiden Antriebsstufen realisiert werden kann.

Aus Gründen der Betriebssicherheit ist die erfindungsgemäße Schubvorrichtung mit einer elektronischen Drehkraftbegrenzung für die erste und/oder die zweite Antriebsstufe ausgerüstet.

Um eine bequeme und einfache Bedienung der Steuereinheit zu gewährleisten, weist diese als Eingabeelemente Touch-Screens auf.

Die beiden Antriebsstufen können vorteilhaft über einen ihnen gemeinsamen Stecker an eine Versorgungsleitung anschließbar sein.

Im folgenden wird die Erfindung anhand einer Ausführungsform unter Bezugnahme auf die Zeichnung näher erläutert.

### Es zeigen:

- Figur 1: eine perspektivische Darstellung einer Ausführungsform der erfindungsgemäßen Schubvorrichtung zur Überführung von Glasartikeln von einer Station einer IS-Glasmaschine auf ein Fördermittel;
- Figur 2: eine teilweise geschnittene Längsansicht der in Figur 1 gezeigte Ausführungsform der erfindungsgemäßen Schubvorrichtung; und
- Figur 3: einen Querschnitt durch die in Figur 1 gezeigte Ausführungsform der erfindungsgemäßen Schubvorrichtung.

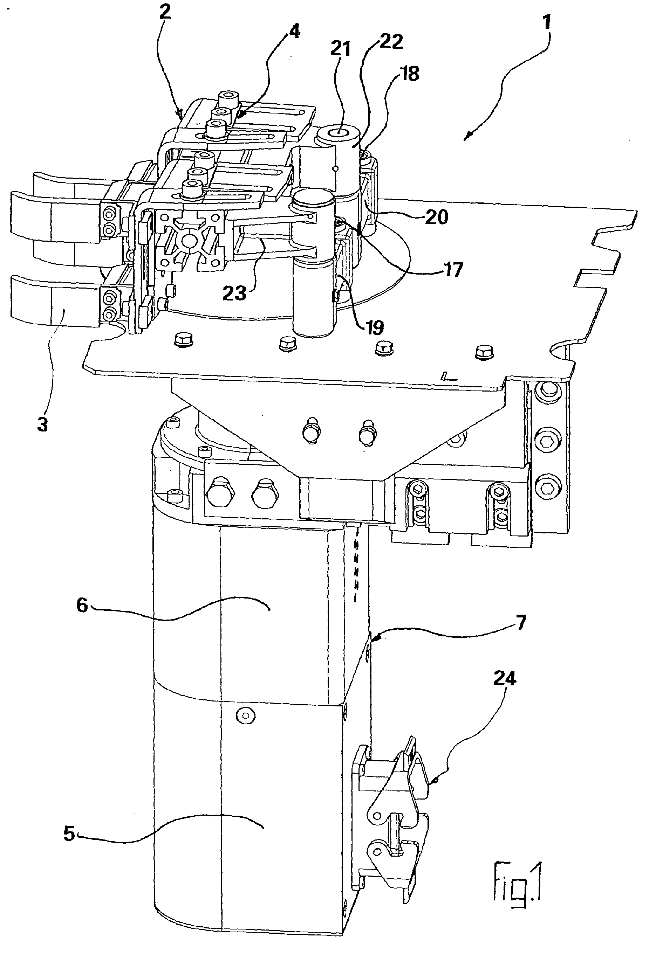

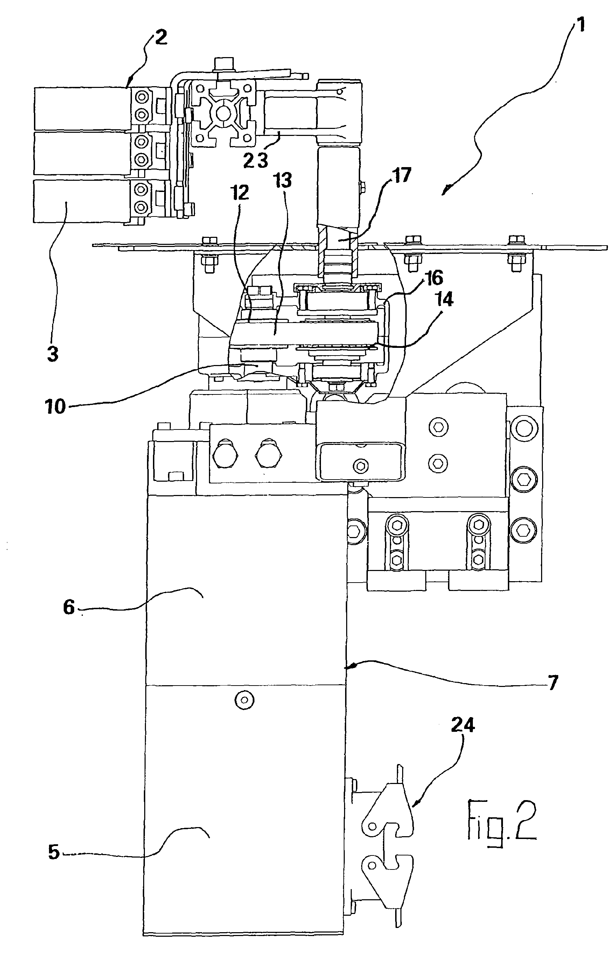

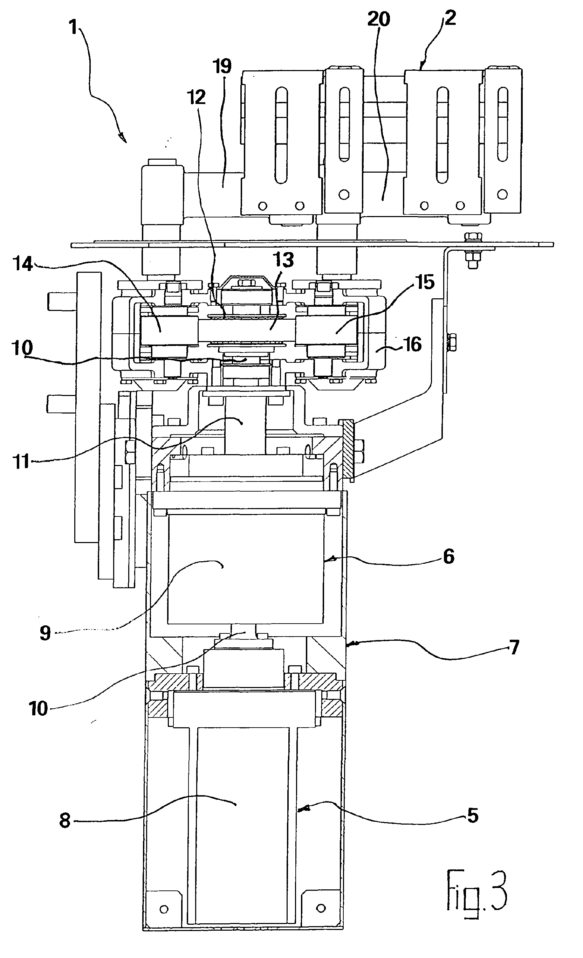

Eine anhand der Figuren 1 bis 3 dargestellte Ausführungsform einer erfindungsgemäßen Schubvorrichtung 1 dient dazu, Glasartikel, die 600 bis 700 Grad C heiß sind, aus einer Station einer IS-Glasmaschine auf ein Fördermittel, z.B. ein Transportband, zu schieben, mittels dem die Glasartikel von der betreffenden Station der IS-Glasmaschine entfernt werden.

Zu der Schubvorrichtung 1 gehört ein Verschiebeglied 2 mit Schubfingern 3, die, wie sich am besten aus Figur 1 ergibt, gebogen und geteilt ausgebildet sein können, um einen besseren Zugriff auf die zu verschiebenden Glasartikel ausüben zu können. Mittels verstellbarer Fixiereinrichtungen 4 kann das Verschiebeglied 2 an unterschiedliche Abmessungen aufweisende, zu verschiebende Glasartikel angepasst werden.

Die zur Durchführung der Verschiebung erforderliche Bewegung des Verschiebeglieds 2 bzw. der Schubfinger 3 wird durch eine Antriebsvorrichtung 5, 6 erzeugt, zu der eine erste Antriebsstufe 5 und eine zweite Antriebsstufe 6 gehören.

Die beiden Antriebsstufen 5, 6 sind in einem ihnen gemeinsamen Gehäuse 7 in Vertikalrichtung übereinander angeordnet, wobei die erste Antriebsstufe 5 unterhalb der zweiten Antriebsstufe 6 bzw. an der dem Verschiebeglied 2 abgewandten Stirnseite der zweiten Antriebsstufe 6 angeordnet ist. Die beiden Antriebsstufen 5, 6 sind innerhalb dieses Gehäuses 7 aneinander angeflanscht.

Die erste Antriebsstufe 5 und die zweite Antriebsstufe 6 weisen jeweils einen Elektromotor 8 bzw. 9 auf. Die beiden Elektromotoren 8, 9 sind als Servomotoren ausgestaltet.

Die mit dem Elektro- bzw. Servomotor 8 ausgerüstete erste Antriebsstufe 5, die im Gehäuse 7 unterhalb der zweiten Antriebsstufe 6 angeordnet ist, hat eine Abgangswelle 10, die die zweite Antriebsstufe 6 und eine von dieser angetriebene Abgangs- bzw. Hohlwelle 11 durchragt, wobei die Abgangswelle 10 der ersten Antriebsstufe koaxial zur zweiten Antriebsstufe 6 und zu deren Abgangs- bzw. Hohlwelle 11 angeordnet ist. Die Abgangswelle 10 der ersten Antriebsstufe 5 überragt die Abgangs- bzw. Hohlwelle 11 der zweiten Antriebsstufe 6 an deren distaler Stirnseite und ist in Bezug auf die zweite Antriebsstufe 6 und deren Abgangs- bzw. Hohlwelle 11 frei rotierbar.

An ihrem die Hohlwelle 11 überragenden Endabschnitt trägt die Abgangswelle 10 der ersten Antriebsstufe 5 ein Antriebszahnrad 12, welches in dem in den Figuren 1 bis 3 dargestellten Ausführungsbeispiel der Schubvorrichtung 1 über einen Zahnriemen 13 mit Abtriebszahnrädern 14, 15 in Antriebsverbindung steht.

Das von der Abgangswelle 10 der ersten Antriebsstufe 5 angetriebene Antriebszahnrad 12, der dieses umschlingende Zahnriemen 13 sowie die über den Zahnriemen 13 mit dem Antriebszahnrad 12 in Antriebsverbindung stehenden Abtriebszahnräder 14, 15 sind an bzw. in einem als Gehäuse ausgebildeten Träger 16 gelagert.

Jedes der beiden Abtriebszahnräder 14, 15 ist drehfest mit einem Wellenzapfen 17 bzw. 18 verbunden. Jeder der beiden Wellenzapfen 17, 18 hat einen Kurbelarm 19 bzw. 20, der entsprechend der Drehung des Wellenzapfens 17, 18 eine Schwenkbewegung ausführt. Die beiden Kurbelarme 19, 20 sind an ihren wellenzapfenfernen Enden mit Drehzapfen 21 versehen, die drehbar entsprechende Lagerhülsen 22 von Stellarmen 23 lagern, die fest mit dem Verschiebeglied 2 und damit mit den Schubfingern 3 verbunden sind.

Mit den vorstehend erwähnten Wellenzapfen 17, 18, Kurbelarmen 19, 20, Drehzapfen 21, Lagerhülsen 22 und Stellarmen 23 wird die auf die Wellenzapfen 17, 18 übertragene Rotationsbewegung der Abgangswelle 10 der ersten Antriebsstufe 5 in eine Schwenkbewegung des Verschiebeglieds 2 bzw. der an diesem vorgesehenen Schubfinger 3 umgesetzt, die Teil desjenigen Bewegungsablaufs ist, mittels dem die Glasartikel auf das Förderband verschoben werden. Eine weitere Komponente dieses Bewegungsablaufs wird mittels einer Dreh- bzw. Schwenkbewegung des Trägers 16 realisiert, in Bezug auf den die Wellenzapfen 17, 18 ortsfest angeordnet sind.

Zur Erzeugung der Schwenkbewegung des Trägers 16 dient die zweite Antriebsstufe 6 der Antriebseinrichtung 5, 6. Die Abgangs- bzw. Hohlwelle 11 der zweiten Antriebsstufe 6 ist an ihrem antriebsstufenfernen Endabschnitt drehfest mit dem Träger 16 verbunden. Eine Drehung der Hohlwelle 11 in die eine Richtung hat somit eine Drehung bzw. Schwenkung des Trägers 16 in eine entsprechende Richtung zur Folge, wohingegen eine Drehung der Hohlwelle 11 in die andere Richtung eine entsprechend entgegengesetzte Drehung bzw. Schwenkung des Trägers 16 verursacht.

Bei einer Verschiebung von Glasartikeln auf das Transportband führen die fest mit den Wellenzapfen 17, 18 verbundenen Kurbelarme 19, 20 eine Drehung bzw. Schwenkung von 360 Grad aus, bis sie ihre Ausgangsposition wieder erreichen.

Der Träger 16 wird mittels der zweiten Antriebsstufe 5 der Antriebseinrichtung 5, 6 zunächst um ca. 90 Grad in die eine Richtung verdreht bzw. verschwenkt, und danach um ca. 90 Grad in die andere Richtung, bis er seine Ausgangsposition wieder einnimmt. Die Verdrehung bzw. Verschwenkung des Trägers 16 in die eine Richtung beginnt etwa in dem Augenblick, wenn die Schubfinger 3 des Verschiebeglieds 2 in Anlage an die zu verschiebenden Glasartikel geraten. Die Dreh- bzw. Schwenkbewegung des Trägers 16 in die andere, entgegengesetzte Richtung findet statt, wenn die Schubfinger 3 des Verschiebeglieds 2 nach dem Verschieben der Glasartikel auf das Förderband außer Anlage mit den Glasartikeln sind.

Die vorstehend geschilderte Schubvorrichtung 1 ist an vorhandene IS-Glasmaschinen universell montierbar. Die Schubvorrichtung 1 kann für alle Produktionsweisen (SG, DG, TG) und alle Mittenabstände (4,25", 5", 5,5", 6", 6,25") eingesetzt werden. Die gleiche Schubvorrichtung 1 ist für LH- und RH-Ausführungen einsetzbar.

Zur Schubvorrichtung 1 gehört eine Steuereinheit, die direkt in eine Steuerungsvorrichtung der IS-Glasmaschine integrierbar ist. Hierdurch ist es möglich, dass an der IS-Glasmaschine vorgenommene Geschwindigkeits- bzw. Taktänderungen unmittelbar und automatisch in dementsprechende Anpassungen und Veränderungen des Bewegungsablaufs der Schubvorrichtung 1 bzw. des Betriebs der beiden Antriebsstufen 5, 6 derselben umgesetzt werden. Aus Gründen der Betriebssicherheit ist die Steuereinheit der Schubvorrichtung 1 mit einer elektronischen Drehkraftbegrenzung für die Antriebseinrichtung 5, 6 versehen.

Der Steuereinheit ist des weiteren ein Touch-Screen zugeordnet, mittels dem eine benutzerfreundliche Bedienung der Steuereinheit möglich ist.

Die beiden innerhalb des Gehäuses 7 übereinander angeordneten Antriebsstufen 5, 6 sind mittels eines ihnen gemeinsamen Steckers 24 an eine Versorgungsleitung anschließbar.

## Patentansprüche

1. Schubvorrichtung zur Überführung von Glasartikeln von einer Station einer IS-Glasmaschine auf ein Fördermittel, mit einem Verschiebeglied (2), das in Anlage an die zu überführenden Glasartikel bringbar und mittels dem die Glasartikel von der Station auf das Fördermittel stellbar sind, Stellteilen (17 bis 23), die unmittelbar mit dem Verschiebeglied (2) verbunden sind, und einer Antriebsvorrichtung (5, 6), mittels der das Verschiebeglied (2) über die Stellteile (17 bis 23) antreibbar ist, **dadurch gekennzeichnet, dass** die Antriebsvorrichtung (5, 6) eine erste Antriebsstufe (5), mittels der die unmittelbar mit dem Verschiebeglied (2) verbundenen Stellteile (17 bis 23) antreibbar sind, und eine zweite Antriebsstufe (6) aufweist, die unter der ersten Antriebstufe (5) angeordnet ist und mittels der ein die unmittelbar mit dem Verschiebeglied (2) verbundenen Stellteile (17 bis 23) halternder Träger (16) antreibbar ist.

2. Schubvorrichtung nach Anspruch 1, deren erste Antriebsstufe (5) einen Elektromotor (8) aufweist, der mit einem Antriebsglied (12) der unmittelbar mit dem Verschiebeglied (2) verbundenen Stellteile (17 bis 23) verbunden ist.

3. Schubvorrichtung nach Anspruch 1 oder 2, deren zweite Antriebsstufe (6) einen Elektromotor (9) aufweist, der in Antriebsverbindung mit dem Träger (16) ist.

4. Schubvorrichtung nach Anspruch 2 oder 3, bei der der Elektromotor (8) der ersten Antriebsstufe (5) und/oder der Elektromotor (9) der zweiten Antriebsstufe (6) als Servomotor bzw. -motoren (8, 9) ausgebildet ist bzw. sind.

5. Schubvorrichtung nach einem der Ansprüche 1 bis 4, bei der die am Träger (16) gehalterten Stellteile (17 bis 23) des Verschiebeglieds (2) mittels der ersten Antriebsstufe (5) während der Überführung eines Glasartikels von der Station zum Fördermittel kontinuierlich in eine Richtung drehbar sind und der Träger (16) mittels der zweiten Antriebsstufe (6) während der Überführung eines Glasartikels von der Station zum Fördermittel in einer ersten Bewegungsphase in die eine Richtung und in einer zweiten Bewegungsphase in die andere, entgegengesetzte Richtung dreh- bzw. schwenkbar ist, wobei die Drehung der Stellteile (17 bis 23) und die Drehung bzw. Schwenkung des Trägers (16) während der beiden Bewegungsphasen desselben einander überlagern.

6. Schubvorrichtung nach einem der Ansprüche 1 bis 5, bei der die erste Antriebsstufe (5) unter der zweiten Antriebsstufe (6) bzw. an der dem Verschiebeglied (2) abgewandten Stirnseite derselben angeordnet ist.

7. Schubvorrichtung nach einem der Ansprüche 2 bis 6, bei der eine Abgangswelle (10) der ersten Antriebsstufe (5) koaxial die zweite Antriebsstufe (6) und eine von dieser angetriebene Hohlwelle (11) durchragt, in Bezug auf die zweite Antriebsstufe (6) und die Hohlwelle (11) rotierbar ist, an der distalen Stirnseite der Hohlwelle (11) durch diese vorsteht und drehfest mit einem das Antriebsglied (12) der unmittelbar mit dem Verschiebeglied (2) verbundenen Stellteile (17 bis 23) bildenden Antriebszahnrad (12) verbunden ist.

8. Schubvorrichtung nach Anspruch 7, bei der das drehfest mit der Abgangswelle (10) der ersten Antriebsstufe (5) verbundene Antriebszahnrad (12) mittels eines Zahnriemens (13) zumindest zwei Abtriebszahnräder (14, 15) antreibt, von denen jedes drehfest mit einem mittels eines Kurbelarms (19, 20) mit dem Verschiebeglied (2) verbundenen Wellenzapfen (17, 18) verbunden ist.

9. Schubvorrichtung nach Anspruch 8, bei der der Träger (16) ein Gehäuse für das Antriebszahnrad (12) der ersten Antriebsstufe (5), den Zahnriemen (13) und die zumindest zwei Abtriebszahnräder (14, 15) ausbildet.

10. Schubvorrichtung nach einem der Ansprüche 7 bis 9, bei der die Abgangs- bzw. Hohlwelle (11) der zweiten Antriebsstufe (6) drehfest mit dem Träger (16) verbunden und dieser mittels der Abgangs- bzw. Hohlwelle (11) entsprechend der Drehrichtung derselben in die eine bzw. die andere Richtung dreh- bzw. schwenkbar ist.

11. Schubvorrichtung nach einem der Ansprüche 1 bis 10, deren beide Antriebsstufen (5, 6) in einem ihnen gemeinsamen Gehäuse (7) angeordnet und innerhalb dieses Gehäuses (7) aneinander angeflanscht sind.

12. Schubvorrichtung nach einem der Ansprüche 1 bis 11, die an vorhandene IS-Glasmaschinen universell montierbar ist.

13. Schubvorrichtung nach einem der Ansprüche 1 bis 12, die als linke und rechte Ausführungsform gestaltbar ist.

14. Schubvorrichtung nach einem der Ansprüche 1 bis 13, deren Steuereinheit direkt in eine Steuerungsvorrichtung der IS-Glasmaschine integrierbar ist, derart, dass Geschwindigkeits- bzw. Taktänderungen der IS-Glasmaschine unmittelbar und automatisch in dementsprechende Anpassungen und Änderungen des Bewegungsablaufs der Schubvorrichtung (1) resultieren.

15. Schubvorrichtung nach einem der Ansprüche 1 bis 14, die eine elektronische Drehkraftbegrenzung für die erste (5) und/oder die zweite Antriebsstufe (6) aufweist.

16. Schubvorrichtung nach einem der Ansprüche 1 bis 15, deren Steuereinheit als Eingabeelemente Touch-Screens aufweist.

17. Schubvorrichtung nach einem der Ansprüche 1 bis 16, bei der die beiden Antriebsstufen (5, 6) über einen ihnen gemeinsamen Stecker (24) an eine Versorgungsleitung anschließbar sind.
